# EUROPEAN PATENT APPLICATION

(11) **EP 1 635 575 A1**
(43) Date of publication of application: **15.03.2006**
(21) Application number: 05000568.5
(22) Date of filing: 13.01.2005
(51) Int. Cl.: H04N 7/26, H04N 7/24

(54) **System and method for embedding scene change information in a video bitstream**

(30) Priority: 13.09.2004 US 939564
(71) Applicant: CyberLink Corp., Shindian City, Taipei (TW)
(72) Inventor: Huang, Jau Hsiung, Shindian City ,Taipei (TW); Huang, Ho Chao, Shindian City, Taipei 231 (TW); Sheng, Dueg Uei, Sindian City Taipei Country 231 (TW)
(74) Representative: Rehberg Hüppe + Partner

(57) **Abstract**

Systems and methods for embedding scene change information in a multimedia bitstream to form a hybrid multimedia bitstream having data representing scene change information as well data representing a multimedia signal. The embedded scene change information may be extracted from the multimedia bitstream by an executable module to assist in manipulating the multimedia bitstream in subsequent steps.

## Description

### TECHNICAL FIELD

The present invention relates to systems and methods for processing multimedia bitstreams and, more specifically, relates to systems and methods for embedding scene change information in, and extracting scene change information from, a multimedia bitstream.

### BACKGROUND OF THE INVENTION

The need to analyze, edit, and process digital multimedia content, for example, digital audio or digital video, has become a necessity for those who manipulate multimedia content. Processing and editing multimedia content, at one time, was thought of as a task only performed by professional studios. However, advances in computing hardware and the technology used for editing audio and video has opened the door to non-professionals as well.

For example, a home movie may be recorded using a personal camcorder and transferred to a personal computer for processing, editing, or long-term storage. Digital camcorders, for example, record audio, video, and other information related to the home movie in digital form, such as on tape, computer memory, or a mass storage medium. The home movie may then be transferred to a personal computer using any number of interfaces, and then stored as a digital stream such as multimedia file in a number of common formats such as MPEG-1, MPEG-2, or DV, for example.

Due to algorithm complexity and the relatively large amounts of multimedia data that is typically edited and/or processed, the task of analyzing, processing, and editing multimedia content can take a considerable amount of time, even on powerful computers.

One example of multimedia analysis that may be performed is the detection of scene changes in the multimedia bitstream. Specifically, video data can be divided into different scenes, which may also be referenced as shots. A scene is a video sequence that consists of continuous video frames for one action. Accordingly, scene change detection is an operation that logically divides video data into the different shots.

By way of example, if a camcorder is used to shoot and record video of a birthday party, a piano recital, and then a school play, each one of those events may be referenced as a scene. Additionally, while recording the school play, if the camcorder shoots and records each Act as a separate sequence of video, then each Act may also be referenced as a scene. Although the video for each of these events may be recorded in one continuous bitstream, the scenes may define places to logically, or physically, partition the video for easier manipulation when editing or processing the associated multimedia bitstream, for example.

Thus, scene change detection may be useful to those manipulating multimedia files for a number of reasons. For example, during the process of editing a home movie, a user may command the editing software to automatically detect scene changes in the video to assist in organizing the movie for editing. Accordingly, the software may split the multimedia file into separate files defined by the detected scenes. Of course, video data may also have audio data associated therewith. Accordingly, the audio data associated with the split video data may also be split at positions defined by the scene changes as well.

To detect scene changes in the video, the editing software may first analyze the multimedia bitstream using a variety of complex algorithms. For example, the analysis may include, but is not limited to, motion detection in the video, the detection of a difference in properties of the associated audio at various positions in the video, or the detection of a significant change in the color, brightness, or saturation of the video bitstream. This analysis is completed in a vacuum, without the consideration of prior processing or analysis that may have been performed on the multimedia bitstream.

The analysis may, typically after a considerable amount of time, provide scene change information. Scene change information indicates positions in the multimedia bitstream where scene changes may occur. Accordingly, multimedia processing or editing software may split the video in these positions or organize the video content based on the scene change positions.

In a subsequent analysis for scene change information, the multimedia bitstream is completely re-analyzed without consideration of the prior analysis. Additionally, if the multimedia bitstream is analyzed for other purposes, such as in preparation for compressing the multimedia bitstream, the analysis is performed without regard to any prior analysis. This may be true even though the same type of analysis (e.g. motion detection, etc.) was performed previously when determining the scene change positions.

Additionally, if the multimedia bitstream is passed to another user or analyzed using different software, as is commonly done during the editing process, the information from prior analysis is lost. Thus, any analysis of the multimedia bitstream already performed must be repeated. This repeated reanalysis of the multimedia bitstream can be very time consuming and wasteful of computing and personnel resources.

### SUMMARY

The present invention is directed to systems and methods for embedding scene change information in, and extracting scene change information from, a multimedia bitstream. One embodiment of the invention may be described as a method for processing multimedia streams. The method may include providing a multimedia bitstream having multimedia content representing a multimedia signal, analyzing the multimedia bitstream for characteristics of the multimedia signal useful for determining a scene change, determining scene change information based on the characteristics of the multimedia signal useful for determining the scene change, embedding the scene change information into the multimedia bitstream to produce a hybrid multimedia data stream, extracting the scene change information from the multimedia bitstream, and manipulating the multimedia bitstream based on the extracted scene change information.

Another embodiment of the present invention may be described as a method for processing multimedia streams. The method may include the steps of providing a multimedia bitstream having multimedia content representing a multimedia signal, and embedding scene change information within the multimedia bitstream, the scene change information indicating a scene change that logically defines portions of video corresponding to continuous video frames. In some embodiments the scene change information may be based on characteristics of the multimedia signal.

Yet, another embodiment of the present invention may be described as a computer readable medium having a computer program for processing multimedia streams. The computer readable medium may include a first code segment for providing a multimedia bitstream having multimedia content representing a multimedia signal, and a second code segment for embedding scene change information within the multimedia bitstream, the scene change information indicating a scene change that logically defines portions of video corresponding to continuous video frames.

Another embodiment of the present invention may include a system for processing multimedia streams. The system may include an executable module for embedding scene change information within a multimedia bitstream, the multimedia bitstream including content representing a multimedia signal, and the scene change information indicating a scene change that logically defines portions of video corresponding to continuous video frames.

Yet another embodiment of the present invention may be described as a system for processing multimedia streams. The system may include an executable module configured to extract scene change information embedded in a multimedia bitstream.

Another embodiment of the present invention may be described as a system for processing multimedia streams. The system may include an executable module for extracting information determined from a prior analysis of the multimedia bitstream from the multimedia bitstream, and an executable module for determining scene change information by using the extracted information from the prior analysis. The system may further include an executable module for embedding the scene change information in the multimedia bitstream.

Other systems, methods, features and/or advantages will be or may become apparent to one with skill in the art upon examination of the following drawings and detailed description. It is intended that all such additional systems, methods, features and/or advantages be included within this description and be protected by the accompanying claims.

### BRIEF DESCRIPTION OF THE DRAWINGS

The components in the drawings are not necessarily to scale relative to each other. Like reference numerals designate corresponding parts throughout the several views.
FIG. 1 depicts an exemplary system for embedding scene change information in, and extracting scene change information from, a multimedia bitstream.
FIG**.** 2 depicts a block diagram of the exemplary computer system of FIG. 1, which includes executable modules for embedding scene change information in, and extracting scene change information from, a multimedia bitstream.
FIG. 3 depicts a block diagram of an embodiment of a system for determining the scene change information to be embedded within a multimedia bitstream.
FIG. 4 depicts an exemplary system for embedding scene change information within a multimedia bitstream.
FIG. 5 depicts a block diagram of an exemplary embodiment of a system for extracting scene change information from a multimedia bitstream, and for embedding scene change information in a multimedia bitstream.
FIG. 6 depicts an exemplary method for embedding scene change information in a multimedia bitstream.
FIG. 7 depicts yet another exemplary method for embedding scene change information in, and extracting scene change information from, a multimedia bitstream.

### DETAILED DESCRIPTION

Embodiments of systems and methods for embedding scene change information in, and extracting scene change information from, a multimedia bitstream are described.

A multimedia bitstream may be, for example, any of a number of types of files, data streams, or digital broadcasts representing any combination of audio, video, data, text, pictures, *etc.* For example, multimedia streams may take the format of an MPEG-1 bitstream, an MPEG-2 bitstream, an MPEG-4 bitstream, an H.264 bitstream, a 3GPP bitstream, a 3GPP-2 bitstream, Standard-Definition Video (SD-Video) bitstream, a High-Definition Video (HD-Video) bitstream, a Digital Versatile Disc (DVD) multimedia bitstream, a Video Compact Disc (VCD) multimedia bitstream, a High-Definition Digital Versatile Disc (HD-DVD) multimedia bitstream, a Digital Television Video / High-definition Digital Television (DTV/HDTV) multimedia bitstream, an AVI bitstream, a digital video (DV) bitstream, a QuickTime (QT) file, Windows Media Audio (WMA) bitstream, a Windows Media Video (WMV) bitstream, an Advanced System Format (ASF) bitstream, or any number of other popular digital multimedia formats. The above exemplary data streams are merely examples, and it is intended that the system cover any type of multimedia bitstream in its broadest sense.

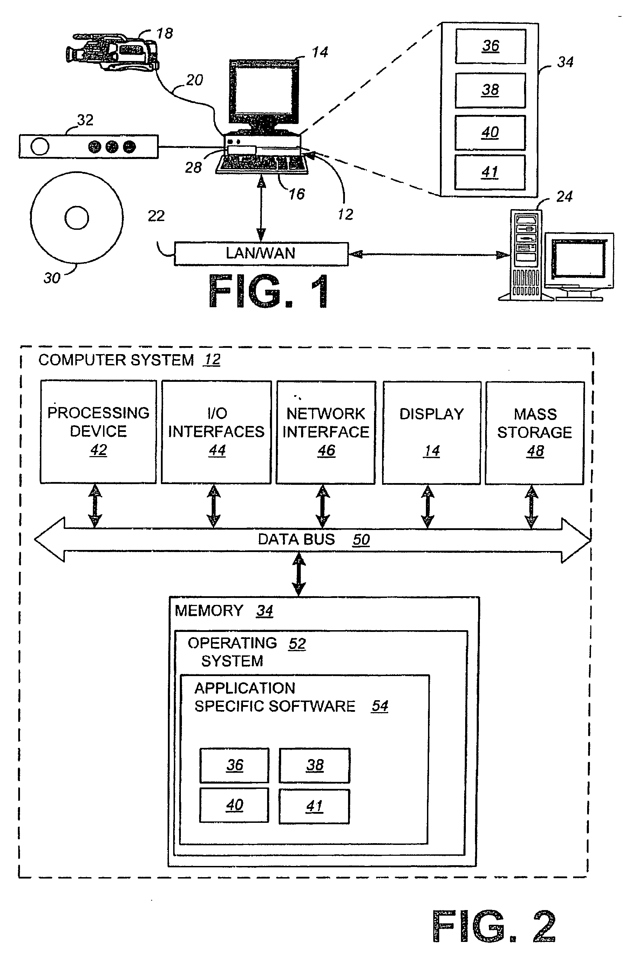

In accordance with certain aspects of a multimedia processing system, FIG. 1 depicts a system for embedding scene change information in, and extracting scene change information from, a multimedia bitstream. The system includes a computer system 12 having a display 14 and user input device 16, which may be a keyboard or a mouse, for example.

A video camera 18 may be coupled to computer system 12 via an electrical cable 20 or a wireless connection. Video camera 18 may, for example, be a digital camcorder which records multimedia content in a variety of digital formats. In this embodiment, electrical cable 20 may be any number of common computer interface cables, such as, but not limited to IEEE-1394 High Performance Serial Bus (Firewire), Universal Serial Bus (USB), a serial connection, or a parallel connection. In this embodiment, a digital multimedia stream may be transferred from video camera 18 to computer system 12 over electrical cable 20.

Computer system 12 may also form a node on a network 22 such as, but not limited to a LAN or a WAN. In this configuration, multimedia bitstreams may be delivered from a remote server 24 over network 22 to computer system 12. The connection between the remote server 24 and computer system 12 may be any number of standard networking interfaces such as a CAT-5, Firewire, or wireless connection. Computer system 12 may also include optical drive 28 to receive and read optical disk 30, which may have multimedia bitstreams encoded thereon.

In some embodiments, a multimedia bitstream may be downloaded to the computer system 12 using multimedia input device 32 which may be a break-out box, or could be integrated onto an expansion card, either of which are electrically connected to computer system 12.

Multimedia input device 32 may include a variety of standard digital or analog input connections for receiving multimedia signals such as, but not limited to, RCA jacks, a microphone jack, Sony/Philips Digital Interface (S/PDIF) connections, optical connections, coaxial cable, and S-video connections. Multimedia input device 32 may include an analog-to-digital converter for converting analog multimedia to digital multimedia streams. In an embodiment in which multimedia input device 32 is a break-out box external to computer system 12, the box is electrically connected in an number of ways, for example, but not limited to, Firewire, USB, a serial connection, or a parallel connection.

Computer system 12 includes a memory 34, which may be used to store a number of executable modules therein. In some embodiments, any of a multimedia acquisition module 36, scene change detection module 38, multimedia editing module 40, and multimedia processing module 41 may be stored therein. Memory 34 may include a number of other modules which, for example, could be sub-modules of multimedia acquisition module 36, scene change detection module 38, multimedia editing module 40, and multimedia processing module 41.

In general, multimedia acquisition module 36 functions to acquire a multimedia bitstream. Multimedia acquisition module 36 may acquire a multimedia bitstream in a number of ways, depending on the source. For example, multimedia acquisition module 36 may coordinate the transfer of a multimedia bitstream from video camera 18, optical disc 28, remote server 24, or a mass storage device 48 (FIG. 2) to computer system 12. Multimedia acquisition module 36 also provides the multimedia bitstream to executable modules such as scene change detection module 38, multimedia editing module 40, and multimedia processing module 41, or any other executable modules that may be used to analyze or manipulate the multimedia bitstream.

Scene change detection module 38 performs the function of analyzing the audio and video content within a multimedia bitstream to determine whether a scene change has occurred at a particular position in the video content of the multimedia bitstream. Multimedia editing module 40 may perform a number of multimedia editing tasks which may be based on the locations of the scene changes in the video. Similarly, multimedia processing module 41 may perform multimedia processing on the multimedia bitstream based on the locations of the scene changes in the video. Accordingly, both multimedia editing module 40 and multimedia processing module 41 may manipulate the multimedia bitstream based on scene change information supplied by scene change detection module 38.

In some embodiments, multimedia acquisition module 36, scene change detection module 38, multimedia editing module 40, and multimedia processing module 41 may be combined into a single module that performs any combination of the tasks performed by each of the modules separately. Thus, any modules or submodules described herein are not limited to existing as separate modules. In reality all modules may operate apart from one another, or could easily be combined as one module. Additionally, it should be understood that each and every module is not essential to perform the systems and methods described herein.

In some embodiments, a user may interact and control the operation of any of multimedia acquisition module 36, scene change detection module 38, multimedia editing module 40, and multimedia processing module 41 through user input device 16 and a graphical user interface within display 14.

Each of the multimedia acquisition module 36, scene change detection module 38, multimedia editing module 40, multimedia processing module 41, and any sub-modules may comprise an ordered listing of executable instructions for implementing logical functions. When multimedia acquisition module 36, scene change detection module 38, multimedia editing module 40, and multimedia processing module 41 are implemented in software, it should be noted that the system can be stored on any computer-readable medium for use by, or in connection with, any computer-related system or method. In the context of this document, a computer-readable medium is an electronic, magnetic, optical, or other physical device or apparatus that can contain or store a computer program for use by or in connection with a computer-related system or method. Multimedia acquisition module 36, scene change detection module 38, multimedia editing module 40, multimedia processing module 41, and any sub-modules can be embodied in any computer-readable medium for use by, or in connection with, an instruction execution system, apparatus, or device, such as a computer-based system, processor-containing system, or other system that can fetch the instructions from the instruction execution system, apparatus, or device and execute the instructions.

In the context of this document, a "computer-readable medium" can be essentially, anything that can store, communicate, propagate, or transport the program for use by or in connection with the instruction execution system, apparatus, or device. The computer readable medium can be, for example, but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

FIG. 2 is a block diagram illustrating an exemplary embodiment of computer system 12 on which multimedia acquisition module 36, scene change detection module 38, multimedia editing module 40, and multimedia processing module 41 may be executed. Generally speaking, the computer system 12 can comprise any one of a wide variety of wired and/or wireless computing devices, such as a desktop computer, portable computer, dedicated server computer, multiprocessor computing device, cellular telephone, personal digital assistant (PDA), handheld or pen based computer, embedded appliance and so forth. Irrespective of its specific arrangement, computer system 12 can, for instance, comprise memory 34, a processing device 42, a number of input/output interfaces 44, a network interface device 46, and mass storage 48, wherein each of these devices are connected across a data bus 50.

Processing device 42 can include any custom made or commercially available processor, a central processing unit (CPU) or an auxiliary processor among several processors associated with the computer system 12, a semiconductor based microprocessor (in the form of a microchip), a macroprocessor, one or more application specific integrated circuits (ASICs), a plurality of suitably configured digital logic gates, and other well known electrical configurations comprising discrete elements both individually and in various combinations to coordinate the overall operation of the computing system.

The memory 34 can include any one of a combination of volatile memory elements (e.g., random-access memory (RAM, such as DRAM, and SRAM, *etc.))* and nonvolatile memory elements (e.g., ROM, hard drive, tape, CDROM, *etc.).* The memory 34 typically comprises a native operating system 52, one or more native applications, emulation systems, or emulated applications for any of a variety of operating systems and/or emulated hardware platforms, emulated operating systems, *etc.* For example, the applications may include application specific software 54, which may include any of the multimedia acquisition module 36, scene change detection module 38, multimedia editing module 40, and multimedia processing module 41. One of ordinary skill in the art will appreciate that memory 34 can, and typically will, comprise other components which have been omitted for purposes of brevity.

Input/output interfaces 44 provide any number of interfaces for the input and output of data. For example, where the computer system 12 comprises a personal computer, these components may interface with user input device 16, which may be a keyboard or a mouse. Where the computer system 12 comprises a handheld device (e.g., PDA, mobile telephone), these components may interface with function keys or buttons, a touch sensitive screen, a stylist, *etc.* Display 14 can comprise a computer monitor or a plasma screen for a PC or a liquid crystal display (LCD) on a hand held device, for example.

With further reference to FIG. 2, network interface device 46 comprises various components used to transmit and/or receive data over network 22. By way of example, the network interface device 46 may include a device that can communicate with both inputs and outputs, for instance, a modulator/demodulator *(e.g.,* a modem), wireless (e.g., radio frequency (RF)) transceiver, a telephonic interface, a bridge, a router, network card, *etc.)*

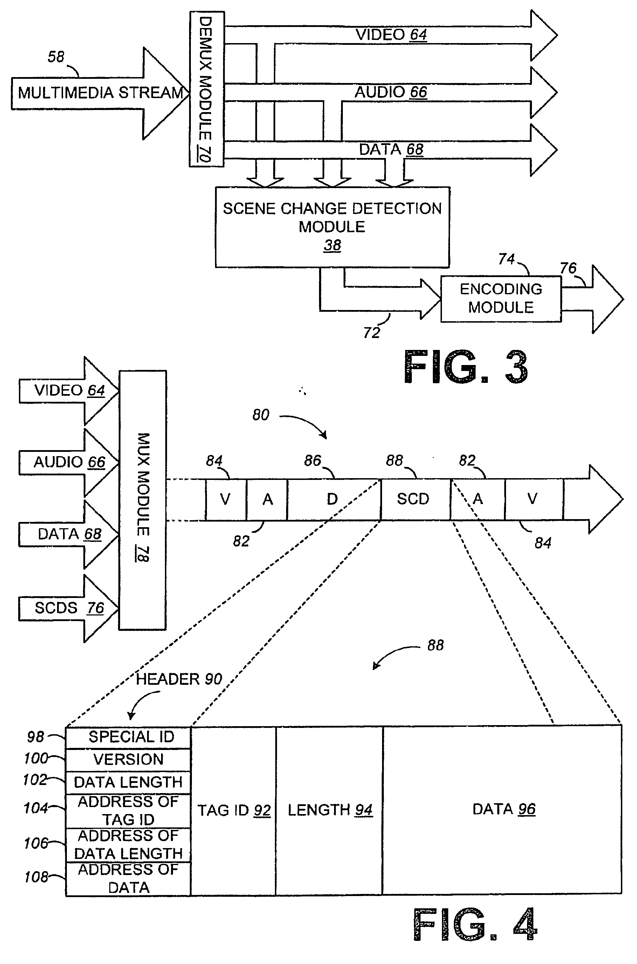

Referring to FIG. 3, an embodiment of a system for determining scene change information to be embedded within a multimedia bitstream is described. Scene change detection module 38 accepts a multimedia stream 58 as input and analyzes the multimedia bitstream 58 for properties related to the multimedia stream indicating a scene change. These properties, or characteristics, of the multimedia bitstream may be further analyzed by scene change detection module 38 to determine whether a scene change has occurred at a particular position in the video content of the multimedia bitstream.

Accordingly, the output of the scene change detection module 38 analysis is information indicating one or more positions in the video of the multimedia bitstream that corresponds to a scene change. This output may be referred to as scene change information. Scene change information may be embodied in a variety of formats and the systems and methods herein are not limited to any particular scene change information format or representation.

In one embodiment, scene change information may include a value representing a likelihood of a scene change and the associated position in the video content of that likelihood. A likelihood, for example, may be a probability represented as a discrete ranking (*e.g*. high, medium, or low), a number (*e.g*. any number between 1 ― 100), or a Boolean representation (*e.g*. true or false). A position may be indicated by an offset from the beginning of the bitstream, a time-code, or a frame number in the bitstream, for example. One potential benefit of including a position with the scene change information is the ability to embed the scene change information anywhere in the multimedia bitstream. For example, the scene change information may be compiled at the beginning or end of the multimedia stream.

However, in some embodiments, a scene change position is not necessary. Rather, the scene change information may indicate that a particular portion of video includes a scene change. For example, if the scene change information is embedded into the video elementary stream with Frame Base (*e.g*. using the USER_DATA field of MPEG), the scene change position may be implied by the location/frame of the embedded information.

Scene changes may be classified by scene change types, which classify the scene change by the method, or attributes of the multimedia bitstream, used to generate the scene change. Thus, in some embodiments, scene change information may include a scene change type which indicates a particular classification of the scene change. For example a scene change type may indicate that the scene change is classified as a clear shot change, fade-in/fade-out, flash light, or time discontinuity (*e.g*. by using time-code information). This information may be useful to predict the reliability of the scene change information and/or to limit the use of the scene change information to a subset of scene change types.

This scene change information may be based upon analysis of either, or both of, the audio and video content within the multimedia bitstream 58 to determine properties, or characteristics, of the multimedia stream that may indicate a scene change. The analysis may include, but is not limited to, detecting the level of color saturation in the video, detecting the contrast or brightness level of the video, detecting the change in the level of sound associated with the video, determining the volume level of audio, determining an amount of motion in the video content, determining if video has been previously altered, determining if video includes a video watermark, determining the level of hiss in audio, determining positions of video in which faces or eyes are located, determining if any human voices are in an audio stream, determining noise level of in the audio, determining frame complexity in the video, detecting skin colors in the video, detecting animation in the video, determining object segmentation, detecting viewer focus, and detecting frame orientation, detecting the differences between successive video frames, or any number of other characteristics of video or audio within a multimedia bitstream that may indicate a scene change.

Additionally, in one embodiment, if information indicating the time the video sequence was shot is available (e.g. embedded in the multimedia bitstream or in a separate location), the difference in time between video sequences may be used to indicate a scene change. For example, the DV standard may include time-code information which may indicate when the multimedia was recorded. If the recording time-codes are discontinuous between two portions of video, this discontinuity may indicate a scene change.

However, these are merely examples of analysis that may be performed to detect scene changes in multimedia bitstreams, and the embodiments of the systems and methods for embedding scene change information into a multimedia bitstream is not limited in any way to the particular scene change analysis used.

This analysis may provide only raw characteristics of the multimedia bitstream at particular locations in the audio and/or video. For example, the analysis may indicate the sound level at a first and second position in the audio associated with a segment of video. Accordingly, the analysis performed by scene change detection module 38 may further include comparing the characteristics of one segment of audio or video in relation to another segment. For example, if the level of sound associated with one segment of video is different from the level of sound associated with another segment of video, this information may be one factor in determining if a scene change has occurred at a particular position in the multimedia bitstream.

In one embodiment, scene change detection module 38 may perform multiple types of analysis to more accurately detect scene changes, and the results of certain types of multimedia analysis may be weighted more heavily than others. Scene change detection module 38 may be configured to consider the results of the multiple types of analysis and output scene change information based on this analysis.

While embodiments have been described in which scene change detection module 38 detects the portions of the multimedia signal defining scene changes using automated algorithms, in some embodiments the scene change information may be supplied by the content provider or a viewer of the multimedia content. For example, an executable module such as scene change detection module 38 may be configured to provide a graphical user interface within display 14 (FIG. 1) to a viewer of the video content. Through the graphical user interface, the user may indicate (*e.g*. via a mouse, keyboard, or remote control) particular starting and ending positions in the video content that correspond to scene changes. In some embodiments, the scene change information may already be embedded in the multimedia bitstream, or the information indicating the position of a scene change may be supplied in a separate file, signal, or bitstream, for example.

Some embodiments may use a combination of automatic detection and manual indication of a scene change. For example, scene change detection module 38 may analyze the video content and make a best-guess as to the locations of scene changes. This best-guess may then be formatted into a human readable format and displayed in the GUI for manual verification and adjustment by the user. Accordingly, while scene change information may be acquired in any number of methods, of which only a few have been provided as examples, the systems and methods for embedding scene change information within the multimedia bitstream are not limited to any particular method of obtaining scene change information.

The scene change information may then be used by other executable modules, for example, to manipulate the multimedia bitstream. Scene change detection module 38, or other executable modules, may also be configured to embed this scene change information into the multimedia bitstream. In some embodiments, scene change detection module 38, or other executable modules, may also be configured to embed the properties or characteristics of the multimedia bitstream that may indicate a scene change in the multimedia bitstream.

Information, such as closed captioning and title information, are sometimes embedded within multimedia bitstreams in a variety of ways, depending on the particular format of the multimedia bitstream. It is contemplated that scene change information may be embedded in similar ways, and the systems and methods for embedding the scene change information will vary depending on the format of the multimedia file.

The exemplary embodiment of FIG. 3 depicts a multimedia stream 58 in the MPEG-2 format, for example. The MPEG standard, known as ISO-13818-1, is capable of multiplexing multiple streams of multimedia content into a single stream. For example, each of a video stream 64, audio stream 66, and private data stream 68, may coexist within multimedia stream 58.

Video stream 64, audio stream 66, and private data stream 68 are known as "elementary streams." The MPEG standard allows for the combination of multiple elementary video, audio, or data streams into the same multimedia stream 58. Thus, for example, multimedia stream 58 may include an audio stream for the English language and a second audio stream for the Spanish language. Likewise, multiple video streams may be used. For example, a first video stream could represent video from one camera angle and a second video stream represents video from another angle. Private data stream 68, sometimes known simply as a data stream, is not limited to any single type of data. Data stream 68 may be used, for example, to provide an identification of multimedia stream 58 or may contain data to be decoded by a closed captioning device.

While the embodiment of FIG. 3 is described as carrying binary data in private data stream 68, in some cases video stream 64 or audio stream 66 may also be configured to have binary data embedded therein. For example, the USER_DATA field of an MPEG encoded bitstream may also be used to have data such as closed captioning data or scene change information encoded therein.

Scene change detection module 38 may consider each of the audio, video, and data streams separately. Therefore, a demultiplexing system, herein DEMUX 70, may be provided to demultiplex, or separate, the elementary streams from multimedia stream 58. Here, multimedia stream 58 is passed into DEMUX 70 and video stream 64, audio stream 66, and private data stream 68 are provided as outputs to scene change detection module 38.

Scene change detection module 38 may analyze the video and/or audio bitstreams to determine scene change information, as described in detail above. In addition to analyzing one, or both of, the audio and video streams, scene change detection module 38 may read and analyzed private data stream 68 to determine scene change information. For example, if any of the elementary bitstreams, such as data bitstream 68, includes closed captioning text, this text may be analyzed to determine scene change information.

Additionally, scene change detection module 38 may determine if scene change information has been embedded within any of the audio, video, or data bitstreams. (e.g. within private data stream 68, for example). In this case, scene detection module 38 may be configured to skip completely, or substantially reduce, further analysis of the multimedia bitstream by extracting the scene change information directly.

Likewise, scene change detection module 38 may determine if properties related to the bitstream that are useful for detecting scene changes have been embedded therein. For example, in determining the scene change information, scene change detection module 38 may need to analyze the multimedia stream to determine the motion in particular segments of the video. If this motion information is already embedded in private data stream 68, for example, scene change detection module 38 may be configured to use this embedded motion information rather than, or to supplement, analyzing the bitstream. In this respect, time may be saved by not reanalyzing, or substantially reducing the amount of analyzing required to determine the scene change information.

Scene change detection module 38 may also include error checking features, such as using a checksum or other identifying information, to determine if information embedded within the data stream corresponds to a particular version, is reliable information, and/or contains information useful for detecting scene changes.

Once scene change detection module 38 has analyzed multimedia stream 58, scene change detection module 38 may provide scene change data 72 as its output. Scene change data 72 represents the scene change information determined from analyzing the audio, video, and/or data bitstreams. Scene change data 72 may be represented in a predetermined format, which may be used directly by other modules such as multimedia editing module 40 or multimedia processing module 41.

As depicted in FIG. 3, however, scene change data 72 may also be passed through an encoding module 74 to convert the format of scene change data 72 into a bitstream conforming to a variety of standard formats. In other embodiments, encoding module 74 may be integrated within scene change detection module 38, rather than operating as a separate, stand-alone module.

In many cases, it is desirable for encoding module 74 to transform scene change data 72 into a formatted data stream conforming to that required by a particular multimedia standard (*e.g*. MPEG-2**,** AVI, *etc.).* In the present embodiment, the predetermined format of scene change data 72 is not one recognized as conforming to an MPEG-2 bitstream. Thus, encoding module 74 is used to convert the scene change data 72 into an MPEG compliant elementary stream, such as formatted scene change data stream 76 which may be a packetized elementary stream consisting of packetized elementary stream (PES) packets. Accordingly, the scene change information represented by scene change data 72 is formatted into scene change data stream 76.

FIG. 4 depicts an exemplary system for combining, or multiplexing, the scene change data stream 76 into a hybrid multimedia stream. A multiplexing module, herein MUX 78, accepts inputs of video stream 64, audio stream 66, private data stream 68 as well as the formatted scene change data stream 76 as output by encoding module 74 in FIG. 3. MUX 78 operates to multiplex, encode, or otherwise combine streams 64, 66, 68, and 76 into a single hybrid multimedia stream 80.

Hybrid multimedia stream 80 may then be stored as a file on any type of mass storage system such as a hard drive, floppy drive, optical drive, optical media, tape, *etc*. Alternatively, the file may be transmitted across a network to a remote host having a module configured to process hybrid multimedia stream 80. For example, multimedia editing module 40, located within computer system 12, may be enabled to read hybrid multimedia stream 80 from the attached mass storage 48.

While the embodiment of FIG. 4 depicts data streams 68 and 76 as separate data streams, in some embodiments, MUX 78, or other circuitry or software upstream of MUX 78, may first combine private data stream 68 and formatted scene change data stream 76 into a single data stream. Therefore, for example, title information data, closed captioning data, and scene change data may coexist within the same elementary stream. Additionally, while the embodiment of FIG. 4 is depicted as existing separately, the system may be included as part of scene change detection module 38 or multimedia editing module 40.

As defined herein, hybrid multimedia stream 80 includes both data representing scene change information and/or characteristics of the multimedia bitstream useful for detecting scene changes as well as data representing a multimedia signal. A multimedia signal includes a video signal and/or an audio signal. The hybrid multimedia stream 80 may also include other types of elementary data streams such as, for example, data stream 68. Thus, while FIG. 4 depicts all four of video stream 64, audio stream 66, data stream 68, and formatted scene change data stream 76, other embodiments of a hybrid data stream 80 may only contain formatted scene change data stream 76 and any one of video stream 64 and/or audio stream 66, for example.

Exemplary hybrid multimedia stream 80 is comprised of a plurality of alternating audio data blocks 82, video data blocks 84, private data blocks 86, and scene change data blocks 88. Audio data blocks 82 represent data from audio stream 66, and video data blocks 84 represent data from video stream 64. Likewise, private data block 86 represents data incorporated from private data stream 68 while scene change data block 88 represents data originating from formatted scene change data stream 76.

Audio data blocks 82, video data blocks 84, private data blocks 86, and scene change data blocks 88 may be encoded in any format and is only limited by the particular standard employed (*e.g*. MPEG-2, MPEG-4, *etc.*)*.* For example, the blocks may be in any sequence and each block may vary in size. Accordingly, for example, private data blocks 86 or scene change data blocks 88 may be placed at the beginning, at the end, or intermittently throughout the hybrid multimedia stream 80.

FIG. 4 also depicts an exploded view of an exemplary scene change data block 88 which may be embedded within the hybrid multimedia stream 80. Scene change data block 88 may include fields, such as, but not limited to, a Header Field 90, a Tag ID field 92, a Length Field 94, and a Data Field 96. Scene change data block 88 may be further encapsulated within a transport packet of a particular multimedia format. For example, scene change data block 88 may be encapsulated within a packetized elementary stream (PES) packet, as defined by the MPEG-2 standard.

Header field 90 may include subfields useful for decoding and extracting the information from scene change data block 88. Subfields may include, but are not limited to, the Special ID Subfield 98, Version Subfield 100, Length of the Data Subfield 102, Address of Tag ID Subfield 104, Address of Length Subfield 106, and Address of Data Subfield 108. The information in Header Field 90 may vary by application and the fields described herein are merely examples of one possible format.

The Special ID Subfield 98 may refer to identifying information that a decoder may use to identify scene change data block 88 as a block containing scene change data, rather than other types of data which may be stored within a particular data stream. Version Subfield 100 may include information which a decoder could use to determine the format version of the data encapsulated in scene change data block 88. The Length of the Data Subfield 102 indicates the total length of Data Field 96. For example, the Length of Data Subfield 102 may indicate that Data Field 96 has a total length of 1024 bytes. The Address of Tag ID Subfield 104 indicates the position in data block 88 where the Tag ID field 92 is located. The Address of Data Length Subfield 106 indicates the position in the data block 88 where the Length Field 94 is located. The Address of Data Subfield 108 indicates the position in the data block where the Data Field 96 is located. For example, each of the Address of Tag ID Subfield 104, Address of Data Length Subfield 106, and the Address of Data Subfield 108 may contain a hexadecimal number referencing a specific memory location, or an offset from a predetermined memory location.

Tag ID Field 92 may identify an identifying tag for the scene change information data. For example, an identifier corresponding to a position in the multimedia stream, and the associated likelihood of that position corresponding to a scene change may be stored under appropriate tags. Accordingly, Tag ID Field 92 may contain data identifying a "position 1" as equivalent to "tag 1," "likelihood 1" as equivalent to "tag 2," and "position 2" as equivalent to "tag 3," and "likelihood 2" as equivalent to "tag 4." The scene change identifiers and their tags are not limited to those described above and will vary depending on the type of scene change information to be embedded. Furthermore, the identifiers and tags are not limited to any particular order. The scene change identifiers and their identifying tags may, for example, be any series of numbers or letters that can be decoded to identify the scene change information in Data Field 96.

Data Field 96 may contain the actual scene change information data and the associated tag for each tag defined in the "Tag ID" field. For example, in the exemplary embodiment, scene change information corresponding to "position 1" may be found by searching sequentially, or otherwise, for the associated "tag 1" within the Data Field 96.

In one embodiment, to assist in searching for a particular tag, and its associated data within Data Field 96, scene change data block 88 may also include a Length of Data Field 94 which contains the length (e.g. the number of bits) of the scene change information associated with a particular tag within Data Field 96.

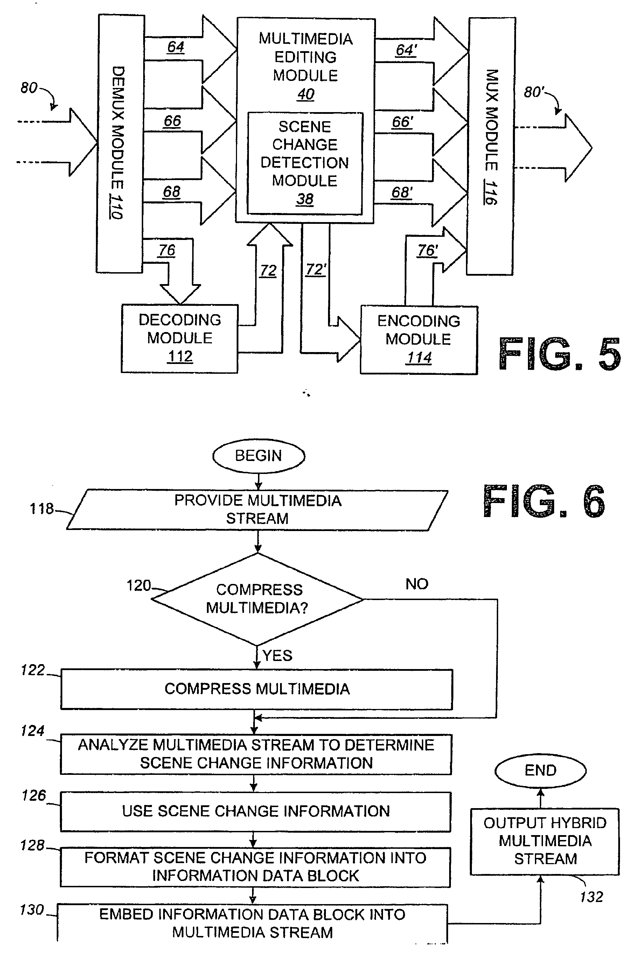

Referring to FIG. 5, another embodiment of a system for embedding scene change information in a multimedia bitstream is depicted. The system of FIG. 5 may also be used to extract scene change information from a multimedia bitstream. The illustrated embodiment includes a demultiplexer, here in DEMUX 110 for demultiplexing, or separating, multimedia streams into elementary streams, a multimedia editing module 40 for editing multimedia content in a multimedia bitstream, a scene change detection module 38 for detecting scene changes in a multimedia bitstream, a decoding module 112 for converting data from a particular multimedia standard (e.g. MPEG-2, etc.) into a format recognizable to multimedia editing module 40, an encoding module 114 for converting data into a bitstream compliant to a particular multimedia standard, and a MUX 116 for multiplexing, or combining, each of the video stream 64', audio stream 66', private data stream 68', and formatted scene change data stream 76' into hybrid multimedia stream 80'.

Scene change detection module 38 is configured to operate substantially as described in relation to FIG. 3. In some embodiments, as in the embodiment of FIG. 5, scene change detection module 38 may be integrated within other executable modules. For example, in FIG. 5, scene change detection module 38 is integrated within multimedia editing module 40.

In general, multimedia editing module 40 performs multimedia editing tasks which may, in part, be based on the scene changes in a multimedia bitstream. For example, multimedia editing module 40 may be configured to split a multimedia bitstream into a plurality of multimedia bitstreams, splice a plurality of bitstreams into a single bitstream, remove portions of the multimedia content, add transition effects between scenes, add audio tracks to the multimedia bitstream, or add text and graphics to the video in a multimedia bitstream.

Multimedia editing module 40 may use the scene change information, output from scene change detection module 38, to manipulate the multimedia bitstream. For example, based on the scene change information, multimedia editing module 40 may split the video into separate files or organize multimedia scenes as separate scenes for assisting a user in editing the multimedia. Scene changes can be used to set title and/or chapter points during the process of video authoring. Thus, multimedia editing module 40 may, among other editing tasks, be configured to read in the scene change information from scene change detection module 38 and perform multimedia editing tasks based on this scene change information.

Other executable modules, such as multimedia processing module 41 (FIG. 1) may also use the scene change information, output from scene change detection module 38, to manipulate the multimedia bitstream. Multimedia processing module 41 may, among other multimedia processing tasks, may be configured to read in the scene change information determined from scene change detection module 38 and perform multimedia processing tasks based on this scene change information. For example, multimedia processing module 41 may use the scene change information to assist in normalizing the audio across the various scenes, to detect commercials, and to enhance video (*e.g*. enhance on the video associated with a particular scene).

Other executable modules, such as a playback module and video browsing module (not shown) may be configured to use scene change information output from scene change detection module 38, to manipulate the multimedia bitstream. For example, a playback system may use the scene change information to provide fast seek points in the multimedia signal.

The executable modules may also be configured to embed information obtained from analyzing the multimedia bitstream and/or information related to the processing performed on the video and/or audio content. For example, multimedia processing module 41 may perform processing steps such as compressing the multimedia bitstream, normalizing the volume of an audio bitstream, changing the contrast or brightness level of a video bitstream, changing the color saturation of a video bitstream, speeding up or slowing down the playback of the bitstream, or other video processing tasks such as enhancing or blurring the video content. When performing processing tasks, multimedia processing module 41, or other executable modules, may perform analysis on the multimedia bitstream. The results of the multimedia processing analysis may be useful for detecting scene changes in later analysis. For example, to compress the multimedia bitstream, motion analysis may be performed on the multimedia bitstream. The results of the motion detection analysis may also be embedded in the bitstream. Accordingly, the results of the motion detection analysis may be later extracted by scene detection module 38 in an effort to reduce the repeated analysis of the multimedia bitstream when determining scene change information.

Multimedia processing module 41 may also be configured to extract and/or use scene change information embedded within the multimedia stream for processing multimedia bitstreams.

While FIG**.** 5 depicts DEMUX 110, MUX 116, decoding module 112, and encoding module 114 as separate modules, it should be understood that each of these modules may be incorporated within multimedia editing module 40. Additionally, as in the embodiments of FIGs. 3 and 4, multimedia stream 80 may be in a variety of multimedia formats and may undergo a variety of pre-processing steps which are not shown. For example, the multimedia stream may be captured in a first format and converted into another format, which may also involve compression of the video and/or audio data.

In some embodiments, a demultiplexer, DEMUX 110, separates hybrid multimedia stream 80 into individual elementary streams - video stream 64, audio stream 66, private data stream 68, and formatted scene change data stream 76. Scene change data stream 76, which may include a plurality of scene change data blocks 88, is passed through decoding module 112. Decoding module 112 is configured to decode the data stored within the scene change data blocks 88, format the data, and pass the data to multimedia editing module 40 which may use the scene change information within the data to edit the audio or video within video stream 64 and/or audio stream 66.

Multimedia editing module 40 may, for example, be enabled to split the multimedia bitstream into segments corresponding to the scene change information. Multimedia editing module 40 requests and receives the scene change information from scene change detection module 38. In some embodiments, multimedia editing module 40 may be configured to directly check the multimedia bitstream for scene change information which may have been embedded therein.

If the scene change information is not embedded within the multimedia bitstream, if the scene change information needs to be updated, or if different scene change information is needed by multimedia editing module 40, then scene change detection module 38 may be configured to provide the appropriate scene change information as described in the embodiments of FIG. 3.

Once the scene change information is provided by scene change detection module 38, or otherwise extracted from the multimedia bitstream, multimedia editing module 40 may then perform editing functions such as, but not limited to, splitting the multimedia bitstream based on the scene change information.

In the embodiment of FIG. 5, multimedia stream 80 is in the same format of multimedia stream 80 as output from MUX 78 from FIG. 4. Thus, exemplary multimedia stream 80 includes a plurality of alternating audio data blocks 82, video data blocks 84, private data blocks 86, as well as scene change data blocks 88.

In practice, an executable module is used to decode scene change data blocks 88 within formatted scene change data stream 76. For example, decoding module 112 may read the Special ID Field 98 in Header Field 90 to determine whether the particular data block is, in fact, one containing scene change information or information useful for determining scene changes. If so, decoding module 112 looks to the Version Subfield 100 to determine whether the version of the scene change data block 88 is known, and therefore able to decode the multimedia data stored within Data Field 96. If decoding module 112 determines that the multimedia data can be decoded, decoding module 112 inspects the contents of Address of Tag ID Subfield 104, Address of Data Length 106, and the Address of Data Subfield 108 to determine the starting address of the Tag ID Field 92, Data Length Field 94 and Data Field 96, respectively.

Decoding module 112 may then jump to the starting address of the Tag ID Field 92, and parse each of the tags and their associated values within Tag ID Field 92, thereby determining the associated tags for the scene change information. In some instances, decoding module 112 may only be interested in a subset of the total information stored in Data Field 96, such as the "location 1" and "likelihood 1" information. In this example, the decoding module 112 may only parse the Tag ID Field 92 until the module determines that "tag 1" and "tag 2" correspond to the "location 1" and "likelihood 1" information, respectively.

Decoding module 112 may then jump to the starting address of the Length of Data Field 94. Decoding module 112 may read the contents of the Length of Data Field 94 to determine the length of the scene change information associated with each tag for which it seeks information. In this example, decoding module 112 determines the length of the scene change information associated with "tag 1" and "tag 2." For example, Length of Data Field 94 may contain data indicating that the data associated with "tag 1" has a length of 32 bytes, and the data associated with "tag 2" has a length of 64 bytes.

Decoding module 112 may then jump to the start of Data Field 96 and parse through the data contained therein until it finds either "tag 1" or "tag 2," which may indicate the start of the associated scene change information.

Beginning with the tag and reading to an offset address determined from the length of scene change information associated with the tag, decoding module 112 may read and temporarily store the associated scene change information in memory. The executable module then continues parsing the Data Field 96 until finding the remainder of the tags by repeating the step of reading the scene change information associated with each tag.

The resulting decoded scene change data 72 is output from decoder 112 in a predetermined format. The scene change information in the scene change data 72 may then be passed into multimedia editing module 40 for use in editing the audio and video bitstreams.

Because scene change detection module 38 may perform analysis of the multimedia bitstream that may be useful for a variety of multimedia editing and processing tasks, information related to that analysis may also be saved and encoded back into multimedia stream 80 in a manner similar to that described in relation to FIGs. 3 and 4. This information useful for multimedia editing and/or processing could be encoded into, for example, private data stream 68' or scene change data stream 76', and embedded within hybrid multimedia stream 80'. The hybrid stream 80' may then be decoded and used by any subsequent executable module configured to extract the multimedia processing and/or editing information from multimedia stream 80'.

Once scene change information and/or information associated with characteristics of the multimedia bitstream useful for detecting scene changes is embedded within a multimedia stream, the amount of reanalyzing of audio and/or video content to determine scene changes may be lessened or eliminated, saving the user a considerable amount of time when editing or processing video. By embedding the information within the bitstream, rather than storing it in a separate file for example, the information not separated from the bitstream. Thus, even if the multimedia bitstream is passed to another computer for further manipulation, the information is available for extraction. By embedding the information in the bitstream itself, the reanalysis of the multimedia stream in subsequent multimedia manipulation steps may be dramatically reduced. Specifically, rather than reanalyzing the multimedia bitstream, results of previous analysis may be extracted from the bitstream.

FIG. 6 represents an exemplary flow diagram depicting a method for embedding scene change information into a multimedia stream. At step 118, a multimedia file is provided, for example, by a multimedia acquisition module.

Because multimedia files, such as DV files, may be excessively large, it is sometimes beneficial to compress the multimedia bitstream. Thus, at decision block 120, a determination is made as to whether compression of the multimedia information is needed. If compression is needed (the YES condition), the multimedia information is compressed, and possibly converted to a new format, using techniques well known to those skilled in the art in step 122. For example, a DV file may be compressed and converted to MPEG-2, or a bitstream already in MPEG-2 format may be further compressed.

The compression step 122 may also perform analysis of the multimedia bitstream that may be useful for detecting scene change information. For example, analysis for video compression may include performing motion estimation. In addition, if desired, analysis other than that needed only for the multimedia compression may be performed during compression step 122. The resulting multimedia attributes from the analysis performed in compression step 122 may be embedded into the compressed multimedia stream.

Continuing with the flow diagram of FIG. 6, if compression is not performed (the NO condition), or after a bitstream has already been compressed in step 122, the multimedia content may be analyzed in step 124 to determine scene change information. At step 126 the scene change information may be used to manipulate a multimedia bitstream by an executable module. For example, a multimedia editing module may use the scene change information to manipulate the bitstream. At step 128, the scene change information may be formatted into at least one data block. At step 130, the data representing the scene change information is embedded into the multimedia stream, for example, by multiplexing the scene change data with video, audio, and/or data. This stream of data is output in step 132 as a hybrid data stream containing both scene change data and multimedia content, such as video and/or audio data.

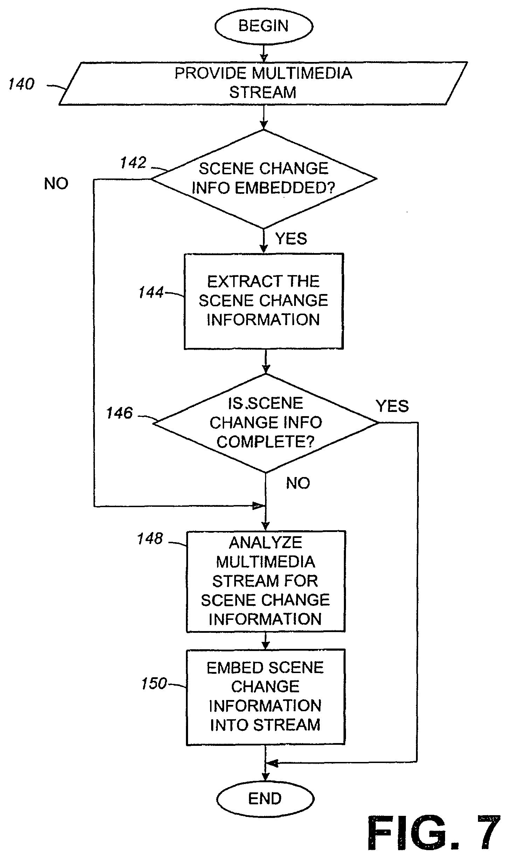

FIG. 7 depicts an exemplary flow diagram representing how a system employing multimedia editing module 40, or other executable modules, might use a hybrid multimedia stream having scene change information embedded therein. At step 140, a multimedia stream is provided which may, or may not, be a hybrid multimedia stream containing scene change information. Accordingly, at decision block 142, a determination is made as to whether any scene change information, or information useful for determining scene changes, is already embedded within the provided multimedia stream. This step may also include decompressing, decoding, and/or demultiplexing the multimedia stream.

On the condition that at least some scene change information is embedded in the multimedia stream (the YES condition of decision block 142), the scene change information is extracted in step 144 and a determination is made at decision block 146 whether the embedded scene change information is all the information that is needed for the multimedia editing module. This may be accomplished by analyzing the header information of the multimedia data blocks within the hybrid multimedia stream, or by analyzing the scene change information itself.

Similarly, if information useful for detecting scene changes is embedded in the multimedia stream, this information may be extracted and used to determine scene change information.

If all the scene change information that is needed for the multimedia editing module is embedded within the data stream (the YES condition of decision block 146), then the multimedia editing module may then receive the scene change information and use it to manipulate the multimedia bitstream.

However, if the necessary scene change information for the executable module is not embedded in the hybrid stream (the NO condition of block 146), the multimedia stream may be analyzed in step 148 to determine the additional scene change information. The multimedia editing module may now be configured to use both the scene change information extracted from the hybrid stream and the scene change information discovered from analyzing the multimedia stream in step 148 to edit the audio and/or video content.

In contrast to situations in which there is no useful scene change information or information useful for determining scene change information embedded in the multimedia stream, only the missing information may need to be determined in step 148. Therefore, step 148, which analyzes the multimedia content for scene changes, is potentially less complicated and time consuming than if a full analysis, including all previously performed analysis, is performed.

If decision block 142 indicates that no scene change information, or information useful for determining scene changes, is embedded in the multimedia bitstream (the NO condition), the scene change detection module analyzes the multimedia bitstream to determine the scene change information. The multimedia editing module may then use the scene change information for editing the audio and/or video content. At step 150, the scene change information, any information related to the multimedia bitstream analysis performed to detect the scene change information, and any information related to how the multimedia bitstream was edited may be embedded into the multimedia bitstream, if desired.

Once the scene change information and/or the information useful for determining scene changes is embedded within the multimedia stream, the information may be extracted and used by any executable module, such as, but not limited to, a multimedia processing module or multimedia editing module configured to decode the information from the multimedia data stream.

While embodiments have been described which embed scene change information into the multimedia bitstream by multiplexing a separate, user-defined data stream with multimedia bitstreams, some embodiments may embed the scene change information in other ways. The format of the hybrid stream, or the process used to embed the scene change information to create the hybrid stream, is not limited to any one embodiment.

For example, in some embodiments, scene change information may be directly embedded in the same bitstream as the video and/or audio information. For example, some multimedia formats, such as formats following the MPEG standard, incorporate user defined data, also known as user data, within the video and/or audio bitstreams. User data may contain any binary data and is not necessarily associated with the video or audio information. Accordingly, this user data may, at least in part, correspond to scene change information. This user data, corresponding to scene change information, may be embedded into the bitstream as defined by the particular multimedia format. Similarly, the scene change information may be extracted and used for subsequent multimedia processing, editing, or analyzing.

Additionally, in some embodiments, scene change information may be embedded within multimedia streams that do not specifically allow for embedding user defined data within the multimedia stream. For example, it is possible to add a pattern of bits to a multimedia bitstream without altering the perceivable audio and/or video content. These bits may contain any binary data and are not necessarily associated with the video or audio information. For example, these techniques are used when embedding digital watermarks to identify copyright information in multimedia bitstreams. Accordingly, similar techniques may be used to embed scene change information within these multimedia streams. Just as digital watermarks, for example, can be detected within a bitstream, similar techniques may be used to extract scene change information from the multimedia bitstream. This scene change information may then be used for manipulating the multimedia bitstream by processing or editing, for example.

Accordingly, the above embodiments are merely examples of the many possible ways to embed scene change information within a multimedia bitstream. Similarly, the above embodiments include mere examples of how to extract and use scene change information embedded within a hybrid bitstream. Additionally, it should be emphasized that many variations and modifications may be made to the above-described embodiments. All such modifications and variations are intended to be included herein within the scope of this disclosure and protected by the following claims.

## Claims

1. A method for processing a multimedia bitstream comprising:
providing a multimedia bitstream having multimedia content representing a multimedia signal; and
embedding scene change information within the multimedia bitstream, the scene change information indicating a scene change that logically defines portions of video corresponding to continuous video frames.

2. The method of claim 1, wherein the step of embedding scene change information includes at least one of the following:
embedding information representing a location in the multimedia signal where the scene change occurs;
embedding information into a portion of the multimedia bitstream, the information indicating that that the portion includes the scene change;
embedding a scene change type in the multimedia signal; and
embedding information representing a likelihood that a particular location in the multimedia signal corresponds to the scene change.

3. The method of claim 1, further including the steps of:
acquiring the scene change information; and
formatting the scene change information into at least one information data block;
wherein the step of embedding scene change information further includes embedding the at least one information data block into a plurality of multimedia data blocks to produce a hybrid multimedia data stream.

4. The method of claim 3, wherein the multimedia signal includes a video signal, and
wherein the step of acquiring the scene change information includes determining scene change information based on the characteristics of the multimedia signal including at least one of the following steps:
determining an amount of motion in at least one segment of the video signal;
determining if the video signal is interlaced;
determining if the video signal has been altered;
determining if the video signal includes a video watermark;
determining the color saturation of the video signal;
determining the contrast level of video signal;
determining the brightness level of video signal;
determining positions of video in which faces or eyes are located;
determining frame complexity in the video;
detecting skin colors in the video;
detecting the level of sound associated with the video signal;
detecting animation in the video;
detecting discontinuity in the video;
detecting the differences between a first video frame and a second video frame; and
detecting frame orientation in the video.

5. The method of one of claims 1 to 4, wherein the step of embedding scene change information comprises multiplexing the scene change information with the content representing the multimedia signal.

6. The method of one of claims 1 to 4, further including:
extracting the scene change information from the multimedia bitstream; and
manipulating the multimedia bitstream based on the extracted scene change information.

7. The method of claim 6, wherein the step of manipulating the multimedia bitstream includes partitioning the multimedia bitstream into segments based on the scene change information.

8. The method of claim 1, wherein the step of embedding scene change information within the multimedia bitstream includes any one of the following:
multiplexing bits representing the scene change information with the content representing the multimedia signal;
embedding bits representing scene change information into the multimedia bitstream; or
embedding a pattern of bits representing scene change information into the multimedia bitstream without altering the perceivable multimedia content.

9. The method of one of claims 1 to 8, further including:
extracting information determined from a prior analysis of the multimedia bitstream from the multimedia bitstream; and
analyzing the extracted information to determine the scene change information.

10. The method of one of claims 1 to 9, further including:
detecting if the multimedia bitstream contains embedded scene change information.

11. The method of claim 10, further including:
identifying the scene change information in the multimedia bitstream; and
determining if additional scene change information is necessary to manipulate the multimedia bitstream, and wherein upon detecting additional scene change information is necessary to manipulate the multimedia bitstream, acquiring the additional scene change information.

12. The method of claim 11, wherein upon acquiring the additional scene change information, embedding the additional scene change information into the multimedia bitstream.

13. The method of claim 10, further including:
identifying the embedded scene change information in the multimedia bitstream; and
determining if additional scene change information is necessary to manipulate the multimedia bitstream;
wherein upon detecting that additional scene change information is not necessary to manipulate the multimedia bitstream, extracting the embedded scene change information.

14. The method of claim 13, further including:
manipulating the multimedia content using the extracted scene change information.

15. The method of claim 10, and wherein upon detecting that scene change information is not embedded within the multimedia bitstream, acquiring the scene change information;
wherein the step of embedding the scene change information includes embedding the scene change information determined from acquiring the multimedia bitstream.

16. The method of claim 10, wherein upon detecting that the multimedia bitstream contains embedded scene change information, extracting the scene change information from the multimedia bitstream.

17. A system for processing a multimedia bitstream comprising:
an executable module for embedding scene change information within a multimedia bitstream, the multimedia bitstream including content representing a multimedia signal, the scene change information indicating a scene change that logically defines portions of video corresponding to continuous video frames.

18. The system of claim 17, wherein the system further includes:
an analyzing module for determining the scene change information.

19. The system of claim 17 or 18, wherein the system further includes:
an executable module for extracting the scene change information from the multimedia bitstream; and
an executable module configured to use the extracted multimedia scene change information to manipulate the multimedia bitstream.

20. The system of claim 19, further including:
a demultiplexer for separating a data stream having the scene change information from a hybrid multimedia bitstream.

21. The system of claim 19, further including:
a multiplexer for combining a data stream having the scene change information with the multimedia bitstream to form a hybrid multimedia bitstream.
